# EUROPÄISCHE PATENTANMELDUNG

(11) **EP 1 867 935 A1**
(43) Veröffentlichungstag der Anmeldung: **19.12.2007**
(21) Anmeldenummer: 06012103.5
(22) Anmeldetag: 13.06.2006
(51) Int. Cl.: F24J 2/54, F24J 2/38

(54) **Dreh-und Schwenkvorrichtung für Solarkollektoren**

(71) Anmelder: Eisenbacher, Matthias, 86641 Rain am Lech (DE)
(72) Erfinder: Eisenbacher, Matthias, 86641 Rain am Lech (DE)

(57) **Zusammenfassung**

Kernpunkt meiner Erfindung ist die Tatsache, dass sich die Neigungskurve des Kollektors dem Sonnenstand anpasst. Dies bewirken 2 Halteseile, welche präzise an 4 Ösenschrauben positioniert sind. Nur 1 Antrieb ist erforderlich.

## Beschreibung

Meine Erfindung basiert auf der Tatsache, dass mit nur 1 Antrieb die Drehbewegung - horizontal - und auch die Schwenkbewegung - vertikal - erfolgt.
Meine Erfindung ersetzt die sehr empfindliche Steuerung durch Sonnensensoren.
Sie ist technisch anwendbar sowohl für Solarthermie als auch für Stromerzeugung (Solarparks).

Entsprechend sind die vorteilhaften Wirkungen der Erfindung:
1. Wegfall des Vertikal-Neigungsantriebes (z. B. Schraubenspindel-Antrieb)
2. Kein Bedarf an Sonnensensoren
3. Zuverlässige und einfache Steuerung über Zeit-Schaltuhr
4. Optimaler Einfallswinkel der Sonnenstrahlung

### Beschreibung der technischen Ausführung meiner Erfindung:

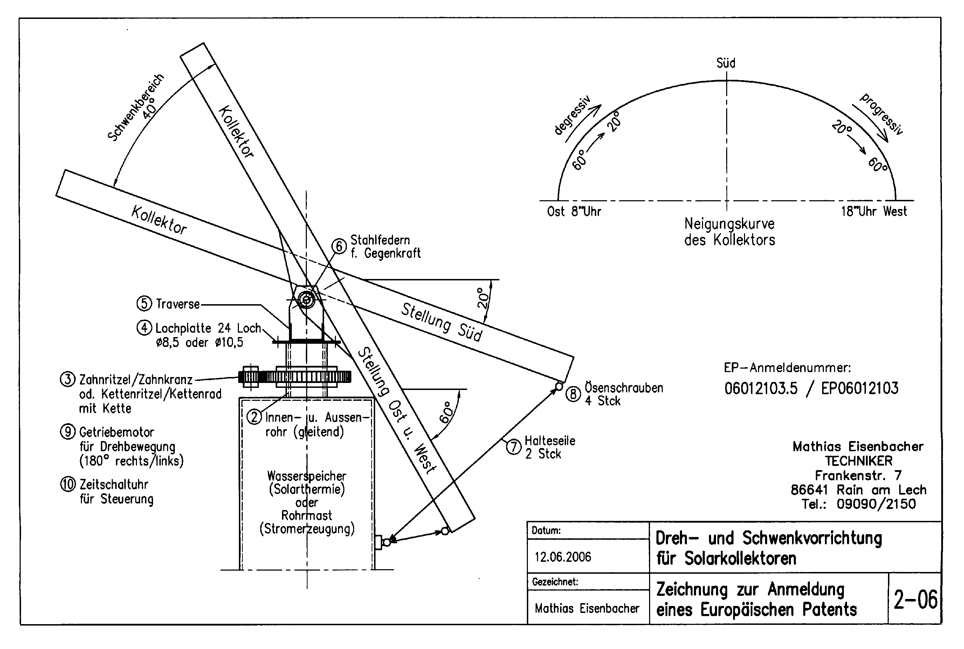

Hierzu ist die Zeichnung Nr. 2-06 "Dreh- und Schwenkvorrichtung für Solarkollektoren" zu vergleichen.
Säule oder Träger der Dreh- und Schwenkvorrichtung ist bei Solarthermie der Warmwasserspeicher und bei Stromerzeugung ein Rohrmast. Auf diesen Trägern ist ein Innenrohr aufgesetzt. Darüber ein Außenrohr mit Schiebe-Gleitsitz.
Auf dem Außenrohr befindet sich ein Zahnkranz (bei Stromerzeugung) oder wahlweise ein Kettenrad mit Fahrradkette (bei Kompakt-Warmwassererzeugungs-Anlage). Am oberen Ende des Außenrohres ist eine Lochplatte mit einem Gewindebolzen zentral angeschweißt. Bei einem Lochkreis-Durchmesser, je nach Anlagengröße, sind 24 Loch (Teilung 15°) oder 36 Loch (Teilung 10°) vorgesehen.
Diese dienen zur Justierung der Anlage, sowie für die manuelle Verstellung.

Auf der Lochplatte wird die Traverse (U-Profil) zur beweglichen, schwenkbaren Aufnahme des Kollektors befestigt! Der Kollektor wird schwenkbar auf der Traverse gelagert und zwar gewichtsgleich ausgerichtet. Eine Stahlfeder, oder 2 Stück, drücken den Kollektor in waagerechte Lage. Mit individuellem Vordruck. 2 Stück Halteseile, mit 4 Stück Ösenschrauben entsprechend positioniert, wirken gegen den Federdruck.

Jeweils 1 Halteseil zieht den Kollektor in Richtung Mittelpunkt der Anlage. Und zwar bei 90° Drehwinkel (in Ost oder West) bis ca. 60° Neigungswinkel. In Stellung Süd sind beide Halteseile gleich belastet und geben ihre maximale Länge dem Kollektor zum Schwenken nach oben frei (bis ca. 20° zur Waagerechten.)

Ein Getriebemotor entsprechenden Drehmomentes bewirkt die Drehbewegung.
Der Arbeitsimpuls und auch die Arbeitszeit des Getriebemotors werden über einen Zeit-Schaltautomaten eingestellt.
Der Arbeitszyklus beginnt z. B. um 9.00 Uhr mit einer Drehung von ca. 10° und entsprechender Schwenkbewegung in Richtung waagerecht. Um ca. 18.00 Uhr hat der Kollektor seine Tages-Endstellung erreicht (West). Je nach Einstellung bekommt der Getriebemotor den Impuls, rückwärtsdrehend, bis zur Ausgangsstellung, usw., usw.

### Anmerkung:

Eine Pilotanlage, wie beschrieben, für Warmwassererzeugung ist von mir erstellt und arbeitet einwandfrei. Hierzu sind beigefügte Fotos zu vergleichen.

### Anlage

5 Fotos

## Patentansprüche

1. Dreh- und Schwenkvorrichtung für Solarkollektoren zur Solarthermie und zur Stromerzeugung, **dadurch gekennzeichnet dass** für beide Bewegungen, horizontal und vertikal, nur 1 Antrieb erforderlich ist. Die Mechanik durch die Halteseile, schnelleres Loslassen zu Beginn und langsamere Flachstellung des Kollektors gegen Mittag (Süd) und umgekehrt, bewirkt einen optimalen Einstrahlungswinkel zum Kollektor. Durch diesen Effekt kann man auf die Verwendung von Sonnensensoren verzichten.

2. Dreh- und Schwenkvorrichtung für Solarkollektoren zur Solarthermie und zur Stromerzeugung, nach Anspruch 1, **dadurch gekennzeichnet, dass** ein Innen- und Außenrohr aus Edelstahl vorgesehen ist.

3. Dreh- und Schwenkvorrichtung für Solarkollektoren zur Solarthermie und zur Stromerzeugung, nach Anspruch 1, **dadurch gekennzeichnet, dass** ein Zahnritzel mit Zahnkranz oder ein Kettenritzel mit Kettenrad sowie passender Kette (z. B. Fahrradkette) erforderlich ist.

4. Dreh- und Schwenkvorrichtung für Solarkollektoren zur Solarthermie und zur Stromerzeugung, nach Anspruch 1, **dadurch gekennzeichnet, dass** eine Lochplatte aus V-Blech mit 24 Bohrungen zur Befestigung der Kollektor-Traverse angebracht wird.

5. Dreh- und Schwenkvorrichtung für Solarkollektoren zur Solarthermie und zur Stromerzeugung, nach Anspruch 1, **dadurch gekennzeichnet, dass** eine Traverse aus Edelstahl zur Aufnahme des Kollektors vorgesehen ist.

6. Dreh- und Schwenkvorrichtung für Solarkollektoren zur Solarthermie und zur Stromerzeugung, nach Anspruch 1, **dadurch gekennzeichnet, dass** eine oder 2 Stück Stahlfedern für Gegenkraft eingebaut sind.

7. Dreh- und Schwenkvorrichtung für Solarkollektoren zur Solarthermie und zur Stromerzeugung, nach Anspruch 1, **dadurch gekennzeichnet, dass** 2 Stück Halteseile befestigt werden.

8. Dreh- und Schwenkvorrichtung für Solarkollektoren zur Solarthermie und zur Stromerzeugung, nach Anspruch 1, **dadurch gekennzeichnet, dass** 4 Stück Ösenschrauben zur Befestigung der Halteseile angebracht werden.

9. Dreh- und Schwenkvorrichtung für Solarkollektoren zur Solarthermie und zur Stromerzeugung, nach Anspruch 1, **dadurch gekennzeichnet, dass** ein Getriebemotor für die Drehbewegungen, links und rechts über 180°, erforderlich ist.

10. Dreh- und Schwenkvorrichtung für Solarkollektoren zur Solarthermie und zur Stromerzeugung, nach Anspruch 1, **dadurch gekennzeichnet, dass** ein Zeitschaltautomat vorgesehen ist.
